# EUROPEAN PATENT APPLICATION

(11) **EP 4 245 696 A1**
(43) Date of publication of application: **20.09.2023**
(21) Application number: 23461533.4
(22) Date of filing: 17.03.2023
(51) Int. Cl.: B65G 1/04, B65G 1/02

(54) **ROBOT, SYSTEM AND METHOD OF STORING CONTAINERS**

(30) Priority: 17.03.2022 PL 44066022
(71) Applicant: Loop Store Sp. z o.o., 40-833 Katowice (PL)
(72) Inventor: Potomski, Konrad, 41-500 Chorzów (PL); Lepczynski, Leslaw, 44-251 Rybnik (PL)
(74) Representative: Witek, Rafal

(57) **Abstract**

The object of the invention is a robot for transporting storage containers, comprising a robot base and a lift, wherein the robot base is provided with an electronic system for controlling the robot, a robot travel drive system, a robot lift drive system, a drive transmission system comprising wheels of the robot and a transmission system for the lift transportation means, and a lift power supply system, wherein the lift is provided with a gripper and a gripper control system, and the lift (3) is provided with guide rollers (7), and the gripper (4) of the lift (3) is connected to a gripper Y-axis slide system (5), a transverse gripper drive system (19) and a longitudinal gripper drive system (22), whereas the lift power supply system (25) comprises a drum (26) with a power supply belt (27), a power supplying system (28) to the drum (26), and a mechanical compensator (29). Another object of the invention is a container storage system. Another object of the invention is a method for storing containers.

## Description

The subject of the present invention is a robot, a system and a method for storing containers. The invention relates to automated systems for storing containers.

A robot for transporting bins and a storage system is known from European patent specification EP3070027 B1, the system including a remotely controlled vehicle, a vehicle support containing a plurality of support rails forming a two-dimensional matrix of guiding meshes, the vehicle support being configured to guide the movements of the remotely controlled vehicle in a first direction X and a second direction Y during use, a bin storage structure supporting the vehicle support, the structure comprising a plurality of storage columns, wherein each storage column is arranged to accommodate a vertical stack of storage bins, and the main part of the bin storing structure coincides with positions on the vehicle support where the supporting rails are crossing, a bin lift device arranged to convey a vehicle delivered storage bin in a direction perpendicular to the lateral plane of the vehicle support between the vehicle support and the delivery station, the remotely operated vehicle comprises a vehicle body comprising a first section for storing vehicle driving means and a second section for receiving any storage bin, stored in a storage column within the storage system, the second section comprising a centrally arranged cavity within the vehicle body, the cavity having at least one bin receiving opening facing towards the storage column during use, a vehicle lifting device at least indirectly connected to the vehicle body for lifting the storage bin into the second section, a first set of vehicle rolling means connected to the vehicle body allowing movement of the vehicle along the first direction X within the storage system during use, and a second set of vehicle rolling means connected to the vehicle body allowing movement of the vehicle along the second direction in the storage system during use, the second direction being perpendicular to the first direction X, at least one of the sets of vehicle rolling means being arranged fully within the vehicle body.

A storage and retrieval system for containers is known from European patent application EP3303188 A1, wherein the automated storage and retrieval system consists of a multi-level storage structure comprising a plurality of rack modules separated by aisles, each rack module comprising a set of horizontal supports configured to store objects at a plurality of storage levels within each aisle and a set of horizontal tracks associated with each of the storage levels, and at least one set of inclined or vertical tracks disposed between and connecting levels of the multi-level storage structure, and at least one mobile robot consisting of one or more horizontal drives that propel at least one mobile robot in at least one direction along at least one horizontal dimension, and one or more vertical drives that propel at least one mobile robot in at least one direction along at least one vertical dimension, wherein the one or more horizontal drives engage with the set of horizontal tracks of the multi-level storage structure, and the one or more vertical drives engage with the inclined or vertical tracks of the multi-level storage structure, and the at least one mobile robot propels itself horizontally along the aisles of the multi-level storage structure and propels itself vertically from level to level of the multi-level storage structure using the inclined or vertical tracks of the multi-level storage structure.

A robot control system and method, a computing device and a storage medium are known from European patent application EP3851253 A1. The robot control system comprises a storage region, a lifting machine, a control device and at least one self-driven robot. The storage region comprises a loft having at least two storeys and is configured to store a container, and there is provided a passage on the floor of each of at least two storeys of the loft for the at least one self-driven robot to move through. The lifting machine is configured to transport at least one self-driven robot or container to a target storey corresponding to a transport task. The control device is configured to assign the transport task to the at least one self-driven robot and to plan a travel route on the target storey for the self-driven robot according to the transport task. The self-driven robot is configured to reach a target container and transport it to a corresponding location, and the control device is communicatively connected to the lifting machine and the at least one self-driven robot.

A multi-container vehicle for an automated storage and retrieval system for containers comprising a three-dimensional grid/rack is known from European patent specification EP3784603 B1. The container handling vehicle for picking up and storing containers from an underlying storage system comprises a first set of wheels arranged on opposite sides of the vehicle body for moving the vehicle along a first direction X on the grid, a second set of wheels arranged on opposite sides of the vehicle body for moving the vehicle along a second direction Y on the grid, the second direction Y being perpendicular to the first direction X, and a first set of wheels for moving in a vertical direction Z between the first position, with the first set of wheels for moving the vehicle along the first direction X, and the second position with the second set of wheels for moving the vehicle along the second direction Y, with the vehicle body surrounding a cavity, in which at least the first lifting device and the second lifting device are arranged side by side, and each lifting device is adapted to lift a storage container from the rack into the cavity so that the bottom of the storage container is at a level above the lowest level of the second set of wheels. Also known is an automated storage and retrieval system containing a three-dimensional grid and at least one container handling vehicle, wherein the grid comprises a plurality of storage columns, in which storage containers can be stored one on top of another in vertical stacks, and a port column for receiving and transporting the storage container to an access station, and the container handling vehicle is operated on rails at the upper level of the grid/rack, wherein a first lifting device and a second lifting device are arranged to enter two adjacent storage columns simultaneously.

Also known and widely used in the state of the art are Cassioli's automated "miniload" type warehouses, which are developed and implemented mainly for the needs of storing and transporting a variety of goods placed in plastic containers characterized by varying sizes and special configurations tailored to customers' needs. Automated "miniload" type warehouses mainly consist of two or more racks spaced closely together, with a central aisle created between these racks, in an operation area of a robotic container handling system. The market offers a variety of solutions in relation to this type of warehouses and robots, with different heights of automated "miniload" type warehouses available, depending on capabilities and needs.

Storage systems including Schäfer's stacker cranes are also known to enable full automation in large warehouses. "Miniload" type warehouses allow for storing and picking of containers, cartons and trays, thus providing greater storage capacity and throughput of such warehouses. Automated "miniload" type warehouses also take advantage of available space in small warehouse halls, providing storage for goods placed in storage containers. This type of equipment can also be used in refrigerated areas. Schäfer's stacker cranes may consist of either one or two main masts. Automated warehouses are available in the form of modular constructions, allowing for the storage system to be individually customized to users' needs through expanding such a system.

In the current state of the art there is known a number of solutions for both container storage systems, container storage assemblies, rack designs, as well as robots capable of picking up containers and delivering them to appropriate locations designated by the storage assembly's control system. Upon many occasions, the designs of known robots prevent access to all storage spaces in a given storage system, which can result in unwanted high torque during lifting and transportation of storage containers, thus generating potential instability problems and clearly limiting the maximum weight handled by the robots. In addition, known methods of retrieving a container with the use of long gripper arms at the further end of the container generates significantly higher energy expenditures, which is unfavorable given the relatively short operating time of robots provided with batteries. Another problem of this type of container retrieval is the possibility of jamming and consequently immobilizing a container during the process of retrieval from the storage shelf. In addition, the construction of storage structures forces a so-called "unearthing" of containers in a "one on top of another" stacking system, which significantly increases container retrieval time and adversely affects economic aspects of the entire storage process, since during charging of the batteries the robot cannot perform the relevant operations. Another inconvenience caused by robot designs from the state of the art is the fact that in order to ensure adequate stability, only one specific container and only one specific container height can be allowed for each type of robot. Another problem in the state of the art is the need to use multiple robots at the same time, which significantly increases operating costs and creates more numerous problems in the operation and maintenance context of such robots, although "miniload" type storage systems are also known to use single robots with a precise and advanced design, which in the event of any malfunction results in a total stoppage of storage system operation.

Unexpectedly, all the above-mentioned technical problems have been solved by the present invention.

The object of the invention is a robot for transporting storage containers, comprising a robot base moving in the X-axis and a lift moving in the Z-axis, wherein the robot base is provided with an electronic system for controlling the robot, a robot travel drive system, a robot lift drive system, a drive transmission system comprising wheels of the robot and a transmission system for the lift transportation means, and a lift power supply system, wherein the lift is provided with a gripper and a gripper control system, whereas the gripper is propelled by the gripper drive system, while the robot base is connected to the lift with transportation means, characterized in that the lift is provided with guide rollers allowing for moving the lift in the Z-axis, and the lift gripper is connected to a gripper Y-axis slide system, a transverse gripper drive system and a longitudinal gripper drive system, wherein the gripper control system comprises a gripper drive control system that is connected to a wireless communication system and a sensor signal concentrator, whereas the lift power supply system comprises a drum with a power supply belt, a power supplying system for the drum, and a mechanical compensator.

Advantageously, the robot is characterized in that the lift has an H-shaped structure.

Advantageously, the robot is characterized in that the transportation means comprise at least two cables or at least two transportation belts.

Advantageously, the robot is characterized in that it comprises at least two guide rollers.

Advantageously, the robot is characterized in that it comprises four guide rollers.

Advantageously, the robot is characterized in that the guide rollers are fixed in the corners of the lift.

Advantageously, the robot is characterized in that the thickness of the power supply belt is analogous to the thickness of the transportation belts.

Advantageously, the robot is characterized in that the power supply system of the robot base and the lift is fixed.

Another object of the invention is a container storage system comprising a robot for transporting storage containers, a modular rack frame structure and a handling station, wherein the robot comprises a robot base moving in the X-axis and a lift moving in the Z-axis, and the robot base is provided with an electronic system for controlling the robot, a robot travel drive system, a robot lift drive system, drive a transmission system comprising wheels of the robot and a transmission system for the lift transportation means, and a lift power supply system, wherein the lift is provided with a gripper and a gripper control system, whereas the gripper is propelled by the gripper drive system, while the robot base is connected to the lift with lift transportation means, whereas the rack structure having a shape defined in the planes of a XYZ coordinate system comprises structural elements connected to each other in a detachable or non-detachable manner, wherein the rack comprises container support shelves fixed perpendicularly to the vertical profiles of the rack structure from which the storage columns are formed, characterized in that the lift is provided with guide rollers allowing for moving the lift in the Z-axis, and the lift gripper is connected to a gripper Y-axis slide system, a transverse gripper drive system and a longitudinal gripper drive system, wherein the gripper control system comprises a gripper drive control system that is connected to a wireless communication system and a sensor signal concentrator, whereas the lift power supply system comprises a drum with a power supply belt, a power supplying system for the drum, and a mechanical compensator, wherein at least one track and a robot power supply system are attached to the upper part of the rack structure, and the side part of the rack structure is provided with vertical guides allowing for moving the lift in the Z-axis with the participation of lift guide rollers.

Advantageously, the system is characterized in that the container support shelves are provided with guide holders.

Advantageously, the system is characterized in that the spacing of the container support shelves is variable.

Advantageously, the system is characterized in that the vertical guides are attached to the guide holders.

Advantageously, the system is characterized in that each storage column comprises at least two vertical guides.

Advantageously, the system is characterized in that the height between the container support shelves is adjustable within the range of 50-500 mm.

Advantageously, the system is characterized in that the height between the container support shelves is adjustable within the range of 120-400 mm.

Advantageously, the system is characterized in that the rack structure comprises at least one single module.

Advantageously, the system is characterized in that the rack structure is extended along the shorter or the longer side of a single module.

Another object of the invention is a method for storing containers comprising a container storage system, characterized in that it comprises the following steps:
a) the robot moves along the track to reach the preset position in the X-axis, after which the lift is lowered into the rack structure with the participation of guide rollers in vertical guides to order to reach the preset position in the Z-axis,
b) the lift with the gripper stops at the base position of container retrieval opposite the previously preset container location, after which the gripper arms extend in the Y-axis toward the corresponding container to a location allowing for the container to be gripped,
c) the gripper clamps at the corners of the container to be grabbed and pulls the container onto the surface of the lift, after which the lift together with the container is pulled into the robot base in the Z-axis,
d) the robot moves to the container returning position in the X-axis, and after the robot has reached the preset location in the X-axis, the lift is lowered in the Z-axis to the handling station, after which the container with the use of gripper arms is ejected in the Y-axis into the handling station, after which the gripper opens and after it has left the container in the handling station, it returns to the base position, after which the lift is pulled into the robot base.

Advantageously, the method is characterized in that the container protrudes beyond the area of the rack structure.

Advantageously, the method is characterized in that the gripper clamps at the corners in the front of the protruding container.

The purpose of the present invention is to provide a storage system with a simplified design and very low failure rate, as well as a method for storing containers that will maximize the efficiency of the storage process and allow for accessing each container separately, so as to minimize the delivery time of a given container to the receiving station and vice versa. Another purpose according to the invention is to effectively increase storage space due to the modular nature of the present solution. Another purpose is to provide a storage system comprising a robot characterized by high stability during operation, higher maximum loads carried, efficient use of space available during operation and a less time-consuming process of lifting and transporting storage containers. Another purpose according to the invention is to enable very fast replacement of the robot or a robot lift itself in case of any failure, without the need for lengthy service operations, which significantly simplifies maintenance procedures and the aforementioned servicing of the storage system. Another purpose is to continuously power the container storage system, without the need to use batteries. Another purpose is to be able to grip a container at the closer end of the container, so as to reduce the risks associated with blocking the container within a rack structure as much as possible. Another purpose is to provide a storage system that allows for the use of universally sized containers, wherein the maximum size of containers is limited by the size of the storage space for each container. Another purpose is to eliminate a vertical pole for guiding the lift and replace it with transportation means. Another purpose is to use special holders, allowing to unambiguously position a container on a rack shelf. Another purpose is the autonomous operation of robots, so that they may carry out orders together and may replace each other in an event of a failure. Another purpose is to use code tapes placed along a robot's travel path to control the robot's positioning in the X-axis, ensuring precise operation. Another purpose is to use specially shaped beams preventing a container from falling outside of the warehouse.

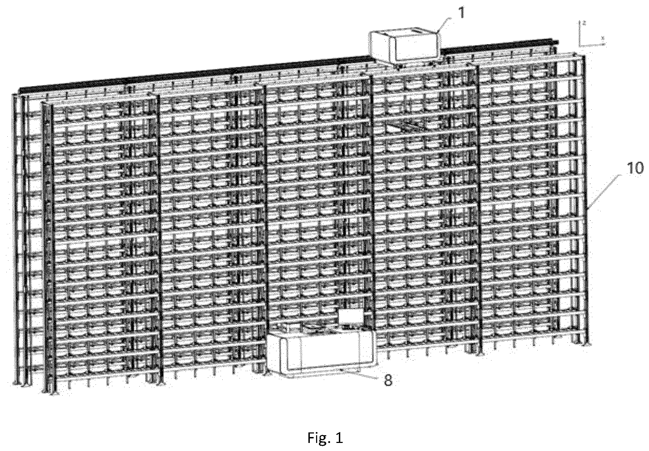

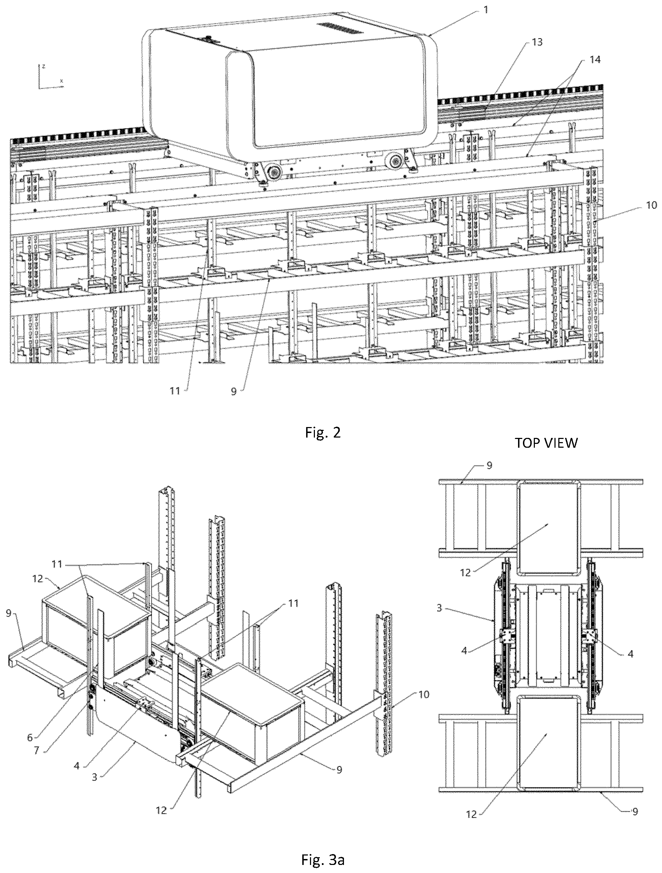

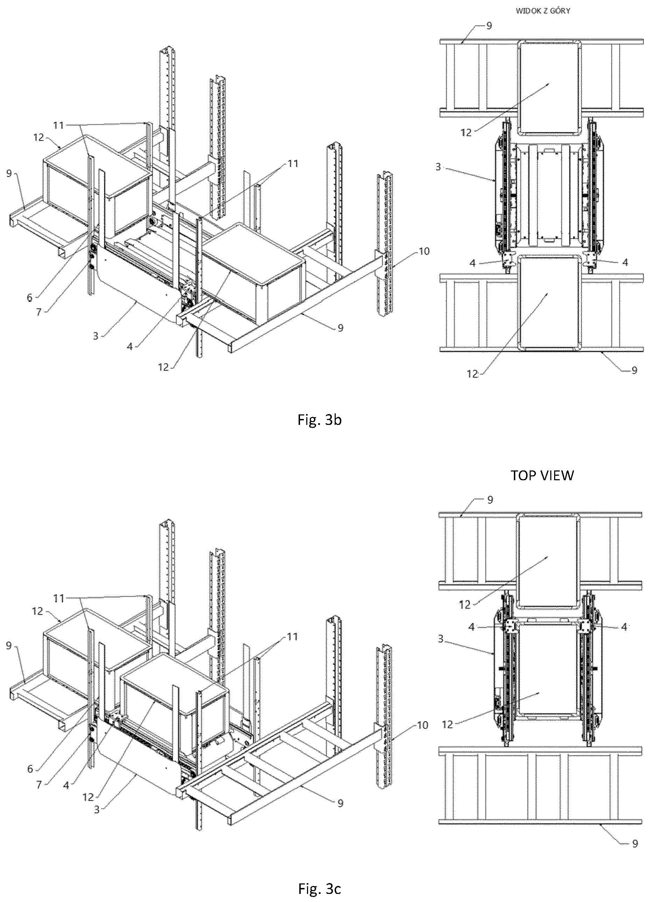

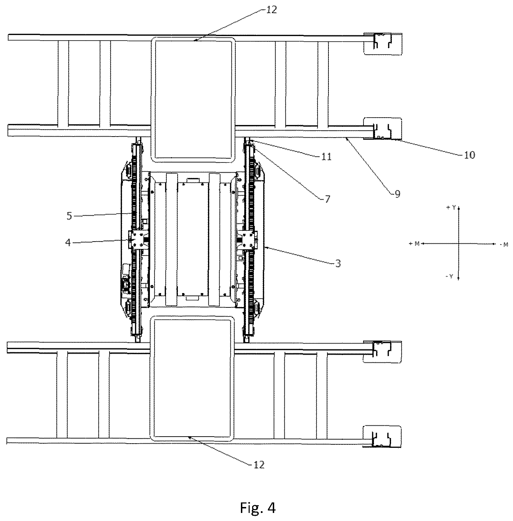

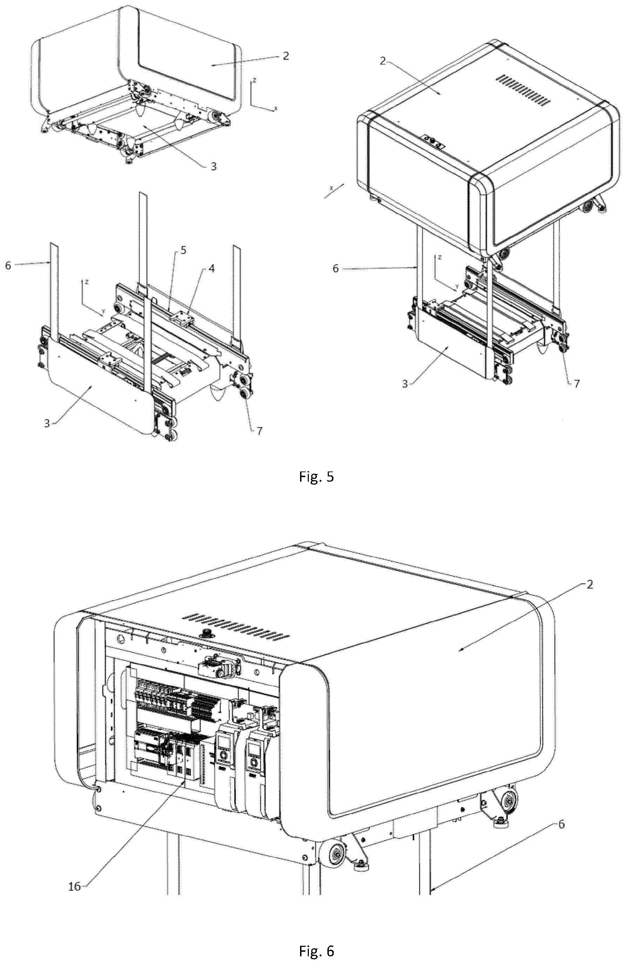

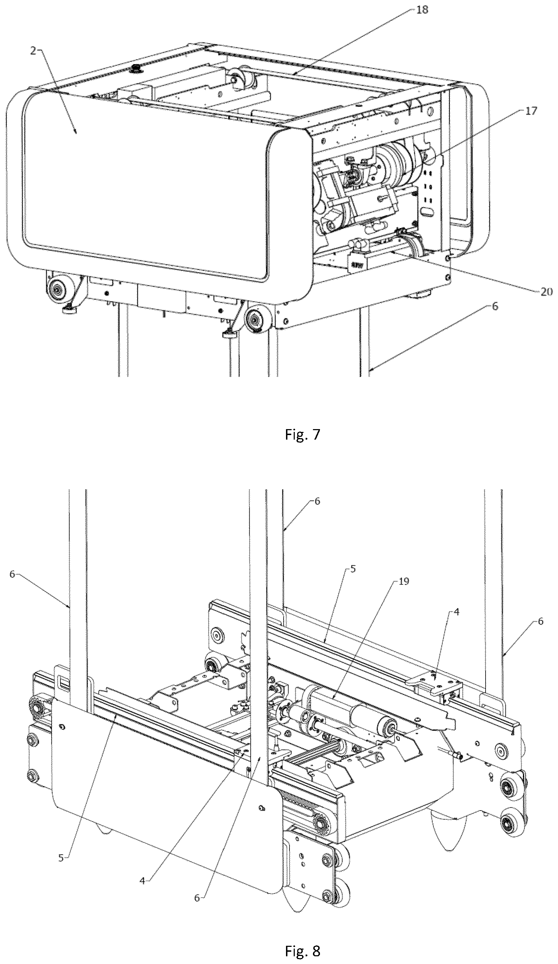

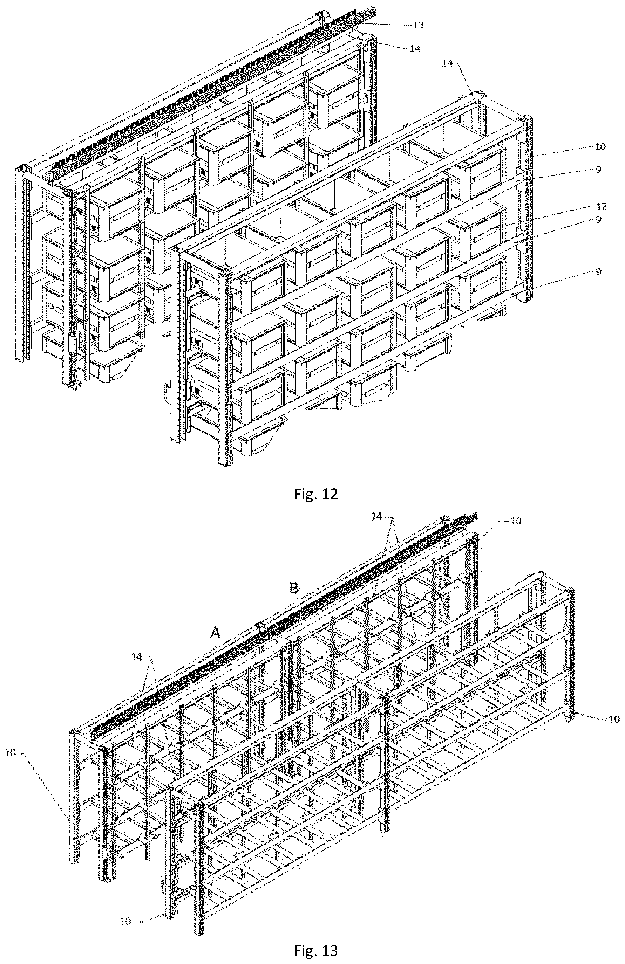

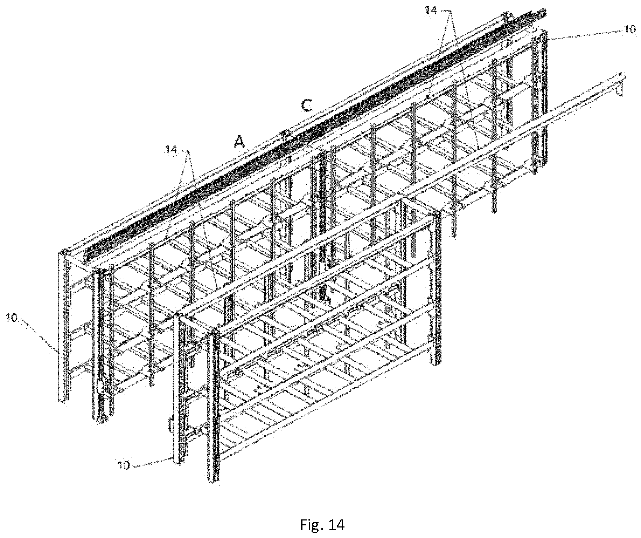

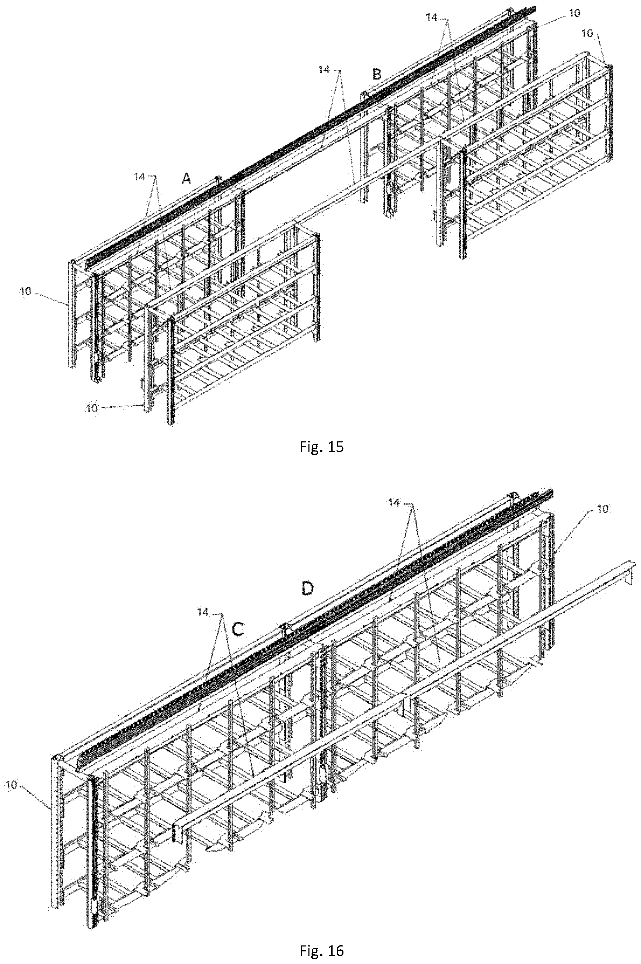

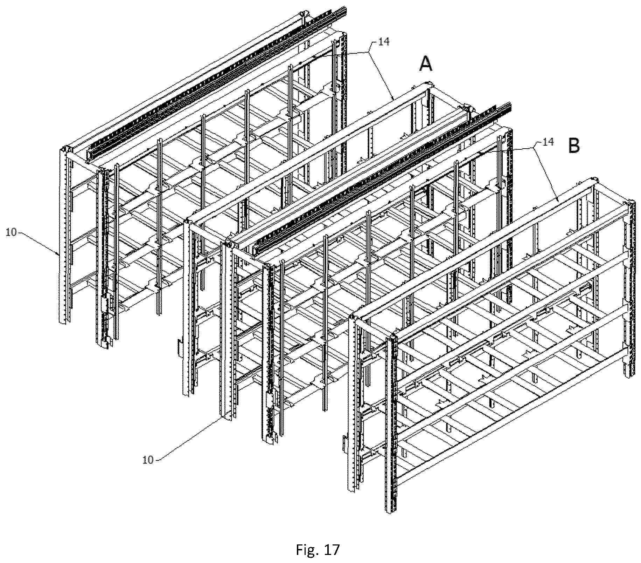

According to the present invention, movement in the X-axis is a horizontal movement of the robot along the track installed on the upper part of the rack structure, movement in the Y-axis is a horizontal movement of the gripper arms to slide the arms within the container support shelf, movement in the Z-axis is a vertical movement of the lift taking into account lowering and raising of the lift, movement in the M-axis is a horizontal movement of the gripper to grip the corners of the container. According to the present invention, the robot shown in fig. 5 consists of a robot base moving in the X axis and a lift moving in the Z axis. The robot base shown in fig. 6 is provided with an electronic system for controlling the robot, arranged in the side part of the robot base structure and responsible for autonomous operation of the robot. The robot base comprises a robot lift Z-axis drive system, a robot X-axis travel drive system, and a robot lift transportation belt transmission system, wherein the transportation belt transmission system is not limited to belts only and may comprise other transportation means allowing for lowering and raising the lift, such as cables and the like. The robot lift drive system is responsible for unrolling and retracting transportation belts and for the stable operation of the lift's vertical movement in the Z-axis. The robot travel drive system is arranged in the chassis of the robot base and is responsible for the precise travel of the robot in the X-axis. The drive transmission is carried out by wheels, which are fixed in each corner of the robot base chassis, while the transportation belt transmission system is fixed in the upper part of the robot base and is the component responsible for transmitting the two transportation belts from the main drive shaft to the opposite part of the robot, thus achieving an even drive of the transportation belts on both sides of the lift. Fig. 8 shows a lift with an H-shaped structure, provided with a gripper allowing for retrieving and holding a container during its vertical and horizontal transport, wherein the gripper is connected to the gripper Y-axis slide system, the gripper drive system and the gripper control system. The gripper control system comprises a gripper drive control system, which is connected to a lift-base wireless communication system and a sensor signal concentrator. The lift is lowered in the Z-axis, into the warehouse, with the use of transportation belts attached to the lift and the robot base. The gripper is a structural element and is adapted to the shape of the container corners, wherein the appropriately selected shape of the gripper allows for stable and steady retrieval of the container. The transverse gripper drive system comprises a motor with a gearbox, which is connected to the drive shaft, and wheels and transmission belts, wherein the transverse gripper drive system allows for transverse movement of the gripper slide system relative to the container (in the M axis). The longitudinal gripper drive system comprises a motor with a gearbox, which is connected to the drive shaft, and wheels and transmission belts, wherein the longitudinal gripper drive system allows for longitudinal movement (in the Y-axis) of the gripper relative to the container and is responsible for transmitting the drive to the gripper slide system and pulling the container onto the lift. The lift is provided with guide rollers that are attached to each corner of the lift, which stabilize the lift during lowering and lifting of the lift. The robot base is connected to the lift by means of a power supply belt, wherein the power supply is not limited to the belt only and comprises other power supply means, such as a cable, etc. The lift power supply system shown in fig. 17 comprises a cable drum, onto which the power tape is wound, a power supply system for the cable drum, and a mechanical compensator. The cable drum is installed adjacent to the robot lift drive system, and at one end of the system a power supply system is arranged. The unrolling and retracting of the power supply belt on the cable drum is carried out at the same time and by the same drive system as the unrolling and retracting of the transportation belts. The thickness of the power supply belt is equal to the thickness of the transportation belts, so that unrolling and retracting are carried out at the same speed, which is crucial for the correct operation of the power supply system. The mechanical compensator is located in the side part of the lift. The compensator, as the lift moves in the Z-axis, compensates the length in a stepless and smooth manner and maintains proper tension of the power supply belt. The cable drum together with the compensator ensure that the power supply belt runs straight and parallel to the Z-axis movement of the lift. The power belt is powered from the electronic system for controlling the robot and supplies current directly to the gripper drive control system, the wireless communication system, and the signal concentrator. Figs. 1, 2 and 10 show a container storage rack structure comprising interconnected structural elements such as angle bars, flat bars, C-channels, T-beams, transverse beams, longitudinal beams, where the rack structure is a frame structure with a shape defined in the planes of the XYZ coordinate system. A track and a robot power supply system are longitudinally attached to the upper part of the rack structure. The robot track comprises at least two parallel rails on which the robot moves, wherein according to the invention the rails may be installed entirely on the upper part of the rack structure, partly on the upper part of the rack structure and partly on additional supports, or entirely on additional supports. The rack additionally comprises container support shelves, which are fixed perpendicularly to the vertical profiles of the rack frame structure. The rack is provided with vertical guides, wherein each guide is attached to the container support shelf structure by means of guide holders, and at least two vertical guides are dedicated to a single storage column comprising multiple support shelves. Containers are placed on the container support shelves, spaced symmetrically with respect to the axis of the rack structure, and the containers are spaced at a fixed distance in order to allow the placement of guides and a free movement of the robot lift guide rollers. The spacing of the container support shelves may be variable and depends on the height of the stored containers. The height setting between the container support shelves can be adjusted within the range of 50-500 mm, advantageously within the range of 120-400 mm, with the height being adjusted in 50 mm increments. The rack structure according to the invention is not limited to a single solution and can be modified accordingly according to a customer's needs. According to the present invention, expanding the rack structure along the shorter or the longer side of a single module means combining a single module with at least one additional single module, achieving an expansion of the rack structure by increasing its height, length or width. Fig. 1 shows a container storage system, consisting of a storage rack, a robot, and a handling station. The robot moves horizontally across the upper part of the rack on an constructed track and is powered by a power supply system. The track and power supply system are attached longitudinally in the X-axis of the moving robot and directly to the rack structure. Containers are placed on the support shelves of the rack structure. The vertical spacing of the containers is fixed, while the horizontal spacing is variable and depends on the height of the stored containers. The containers, depending on the needs, can range in shapes and sizes. Rack structures are placed opposite each other and are connected by supports, and their spacing is fixed, matching the width of the robot lift. The rack structures can be connected to each other from the side, both left and right, as shown in fig. 12. Figs. 3a, 3b, 3c and 4 show the method of retrieving containers comprising a robot, a rack structure and a container storage area. In the initial stage, the robot moves along the track in the X-axis to reach a preset position in the X-axis, and then the lift is lowered into the rack in the Z-axis by means of transportation belts in order to reach a preset position in the Z-axis, after which the lift is stopped with the gripper in the base position set in the center (fig. 3a). The gripper arms move in the Y-axis (fig. 3b) in the direction of the corresponding container to its front and to a location for gripping the container, after which the gripper clamps in the M-axis at the corners of the container to be gripped and the container is pulled onto the surface of the lift (fig. 3c). The lift together with the container is pulled into the robot base in the Z-axis, after which the robot moves to the container returning position in the X-axis. After the robot has reached the preset location in the X-axis, the lift is lowered to the handling station in the Z-axis, and the container is ejected with the use of gripper arms in the Y-axis, after which the gripper opens in the M-axis and returns to the base position after leaving the container in the handling station, and next the lift is pulled into the robot base. The method of retrieving containers from the handling station and storing them on rack shelves comprises all the analogous steps shown above, with all the steps performed in reverse order. Due to the modular nature of the storage system, it is possible to expand or reduce the storage area by reducing rack modules. The storage system according to the invention is not limited in any way, and the expansion is customizable according to a user's needs. Fig. 13 shows the connection of two racks A and B. The connection of the racks in the horizontal direction is realized by the addition of the racks to the shorter side of the structure. Racks A and B may range in capacity and height, wherein the level of the upper part of the structure at the point of joining the track must be kept even. In turn, fig. 14 shows the connection of one rack A module to a one-piece rack C module. The connection involves attaching one part of rack C to the shorter side of rack A structure. On the opposite rack C a track is installed at the same level as the track of racks A and C. Racks A and C may range in capacity and height, wherein the level of the upper part of the structure at the point of joining the track must be kept even. Fig. 15 shows the connection of one rack A module with a rack B module. The connection of the racks is made by means of a track installed on the ends of the rack structure. Racks A and B may range in capacity and height, however, they must retain an even level of the upper part of the structure at the point of joining the track. The track installed between rack A and B modules, with the spacing between the racks not exceeding 2.8 meters, does not require an additional support structure. Additional support structures can be installed in any manner when the spacing between racks exceeds 2.8 m. In turn, Fig. 16 shows the connection of two one-piece rack C and D modules. The connection involves attaching rack C to the shorter side of rack D structure. A track is installed on the opposite side of rack C and D, at the same level as the track of rack C and D. The track on the opposite side of the racks may be supported by a structure or other elements allowing for the track to be installed in a stable manner. Racks C and D may range in capacity and height, wherein the level of the upper part of the structure at the point of joining the track must be kept even. Fig. 17 shows the connection of two racks A and B. The joining of the racks in the direction of their width is realized by the addition of the racks to the longer side of the structure. Racks A and B may range in capacity and height, wherein the track of racks A and B has to be at the same level. As indicated above, the storage system can comprise a variety of types of structures that adapt to a user's needs, and according to the invention, modular structures are not limited in any way.

The advantage according to the present invention is that the access time to a container is reduced and that any variety of items can be placed in the containers since each container is accessible individually, without the need to "unearth" the containers from a column of stored containers. Another advantage is the ease with which the system can be adapted to a user's available storage space, without interfering with existing infrastructure. Another advantage is that the system can be easily relocated due to its modular design, which is relatively simple and easy to operate, as well as to be potentially expanded/rebuilt. Another advantage is the maximum utilization of warehouse space and the use of non-standard areas, especially in the case of split warehouse halls. Another advantage is the relatively low investment cost compared to storage systems that have been brought into use. Another advantage is the possibility of a specific combination of storage and transportation functions, made possible with the use of modularity of the structure and the possibility of installing the track itself (the possibility of guiding a robot along an almost arbitrarily arranged track) with the omission of storage zone in a warehouse comprising serially connected zones A, B and C, where storage zones may be installed in zones A and C, whereas zone B can serve a purely transportation function, wherein such a storage structure is particularly advantageous in manufacturing operations, where there is often a need to adapt the storage system to the internal production infrastructure, where a multi-tasking robot retrieves components, transports them to production stations, and then retrieves semi-finished or final products and transports them to the finished goods warehouse. Another advantage is that there is no need for manual operation of the modular warehouse system, which further enables optimization of employees' working time. Another advantage is the increased efficiency of the warehouse system due to the full automation of the container storage process by creating a possibility of using several robots on a single track. Another advantage is the high efficiency and reliability of the system, where in the event of a potential failure of one robot, subsequent efficient autonomous robots take over the tasks in their turn, and thus the continuity of the container retrieval/storage process is maintained. Another advantage is the free ability to increase storage capacity of a full storage system, through the ability to simply and safely expand the modular system with additional storage racks. Another advantage is that no special floor preparation is required when installing the storage system. Another advantage is the constant power supply for the robot and the lift, eliminating downtime associated with charging in the case of solutions in which robots have built-in batteries. Another advantage is the full control of goods entering and leaving the warehouse, as well as increased safety for bystanders working within the system.

The object of the invention in the embodiments is shown in the drawing, in which fig. 1 shows the container storage system comprising the rack structure, the robot and the handling station, fig. 2 shows the robot placed on the track, figs. 3a, 3b, 3c show a part of the rack structure with the lift and containers shown in three phases of container retrieval cycle, fig. 4 shows the lift in top view during container retrieval, fig. 5, shows the robot provided with the lift, figs. 6 and 7 show the robot base and its various systems, figs. 8 and 9 show the lift and its individual systems, i.e. the gripper drive system and gripper control system, fig. 10 shows the robot with the lift lowered, figs. 11-18 show the arrangement of racks (expansion possibilities) and the track in various configurations.

### Example 1 - Robot

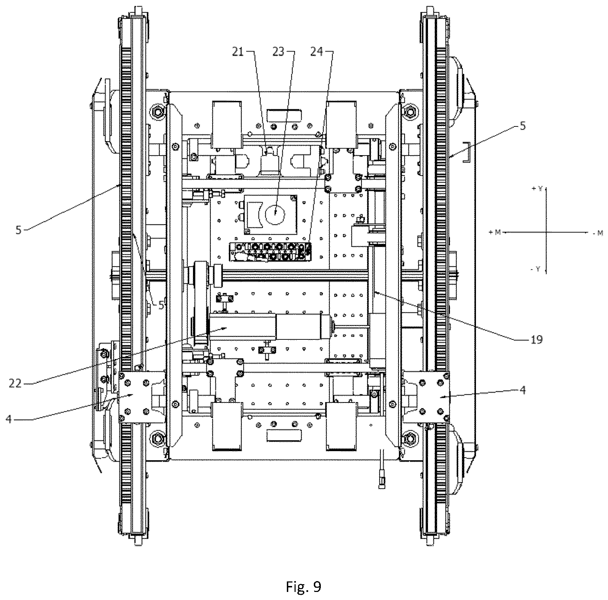

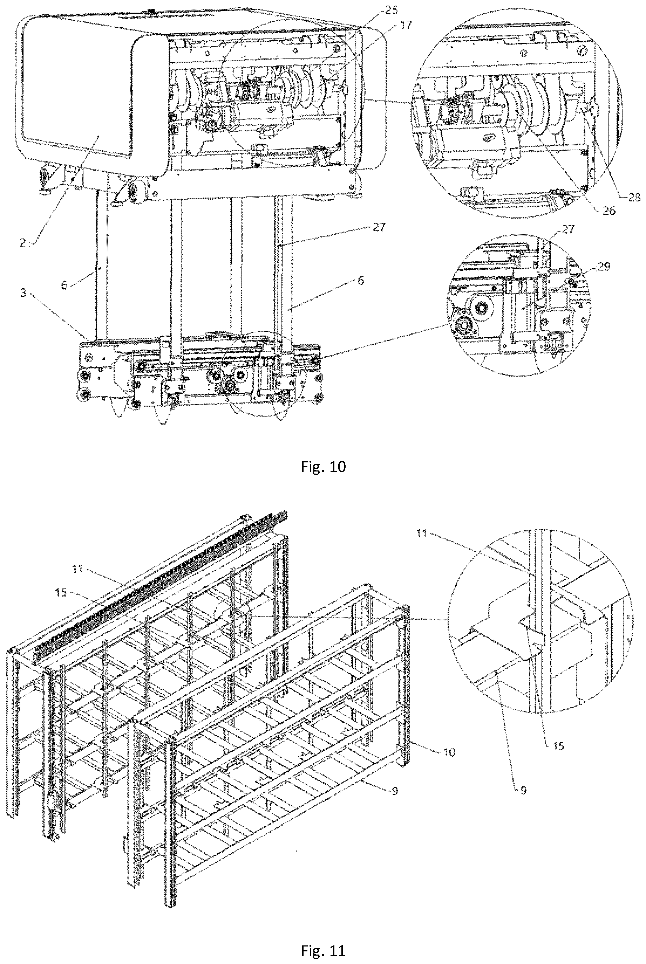

The robot 1 (fig. 5) consists of the robot base 2 moving in the X axis and the lift 3 moving in the Z axis. The robot base 2 (fig. 6) comprises the electronic system 16 for controlling the robot, located in the side part of the structure, the drive system 17 for robot 1 lift moving in the Z-axis, the transportation belt transmission system 18, the robot X-axis travel drive system 20, and the lift power supply system 25. The robot lift drive system 17 (fig. 7) is located in the upper part of the robot base 2, whereas the travel drive system 20 is located in the chassis of the robot base 2. Wheels are fixed in each corner of the robot base 2 chassis, while the transportation belts transmission system 18 is fixed in the upper part of the robot base 2. The lift 3 (fig. 8) with an H-shaped structure is provided with a gripper 4 for retrieving the container 12 (fig. 3c) and holding it during vertical and horizontal transport, wherein the gripper 4 is connected to the gripper Y-axis slide system 5 (fig. 4), the transverse gripper drive system 19 and the gripper control system. The gripper control system 4 comprises the gripper drive control system 21 (fig. 9), which is connected to the lift-base wireless communication system 23 and a sensor signal concentrator 24. The lift power supply system 25 (fig. 10) comprises the cable drum 26 onto which the power supply belt 27 is wound, the power supply system 28 for the cable drum 26, and the mechanical compensator 29. The cable drum 26 is installed directly at the robot 1 lift drive system 17, and at one end of the system the power supply system 28 is arranged. The power supply belt 27 has the same thickness as the transportation belts 6. The mechanical compensator 29 is located in the side part of the lift 3. The lift 3 is lowered in the Z-axis, into the warehouse, with the use of transportation belts 6 attached to the lift 3 and the base of the robot 2. The gripper 4 is a structural element and is adapted to the shape of the corners of the container 12, wherein the appropriately selected shape of the gripper 4 allows for stable and steady retrieval of the container 12. The transverse gripper drive system 19 comprises a motor with a gearbox, which is connected to the drive shaft, and wheels and transmission belts, wherein the transverse gripper drive system 19 allows for transverse movement of the gripper slide system 5 relative to the container (in the M axis). The longitudinal gripper drive system 22 comprises a motor with a gearbox, which is connected to the drive shaft, and wheels and transmission belts, wherein the longitudinal gripper drive system 22 allows for longitudinal (Y-axis) movement of the gripper 4 relative to the container 12. The lift 3 is provided with guide rollers 7 (fig. 5), which are attached to each corner of the lift 3. The robot base 2 is connected to the lift 3 by means of the power supply belt 27.

### Example 2 - Rack structure for storing containers

The rack structure 10 (figs. 1, 2 and 11) for storing containers 12 consists of interconnected structural elements, where the rack structure constitutes a frame structure with a shape defined in the planes of the XYZ coordinate system. The track 14 and the robot power supply system 13 are longitudinally attached to the upper part of the rack structure 10. The rack additionally comprises container support shelves 9, which are fixed perpendicularly to the vertical profiles of the rack frame structure 10. The rack is provided with vertical guides 11, wherein each guide 11 is attached to the container support shelf 9 structure by means of guide holders 15, and at least two vertical guides 11 are dedicated to a single storage column comprising multiple support shelves 9. Containers are placed on the container support shelves 9, spaced symmetrically with respect to the axis of the rack structure 10, with the containers 12 spaced at a fixed distance with respect to each other. The spacing of the container support shelves 9 may be variable and depends on the height of the stored containers 12. The height setting between the container support shelves 9 can be adjusted within the range of 50-500 mm, advantageously within the range of 120-400 mm, with the height being adjusted in 50 mm increments.

### Example 3 - Container storage system

The container storage system (fig. 1) consists of a robot 1, the structure of which is shown in the Example 1, a storage rack structure 10, the structure of which is shown in the Example 2, and a handling station 8. The robot 1 moves horizontally across the upper part of the rack on the constructed track 14 and is powered by the power supply system 13. The track 14 and the power supply system 13 are fixed longitudinally in the X-axis of the moving robot 1 and directly to the rack structure 10. The track 14 is formed on at least two modules, or on a single module with the use of an additional support parallel to the single module. Containers 12 are placed on the support shelves 9 of the rack structure 10. The vertical spacing of the containers 12 is fixed, while the horizontal spacing is variable and depends on the height of the stored containers 12. The rack structures 10 are placed opposite each other and are connected by supports, and their spacing is fixed, matching the width of the robot lift 3. The rack structures 10 can be connected to each other from the side, both from the left and the right side (fig. 13).

Example 4 - Method for retrieving containers from the rack and from the handling station The method of retrieving containers (figs. 3a, 3b, 3c and 4) comprises the robot, the rack structure and the container storage area. In the initial stage, the robot moves along the track in the X-axis to reach a preset position in the X-axis, and then the lift is lowered into the rack in the Z-axis by means of transportation belts in order to reach a preset position in the Z-axis, after which the lift is stopped with the gripper in the base position set in the center (fig. 3a), after which the gripper arms move in the Y-axis (fig. 3b) in the direction of the corresponding container to its front and to a location allowing for gripping the container, after which the gripper clamps in the M-axis at the corners of the container to be gripped and the container is pulled onto the surface of the lift (fig. 3c), and next the lift together with the container is pulled into the base of the robot in the Z-axis, after which the robot moves to the container returning position in the X-axis. After the robot has reached the preset location in the X-axis, the lift is lowered to the handling station in the Z-axis, and the container is ejected with the use of gripper arms in the Y-axis, after which the gripper opens in the M-axis and returns to the base position after leaving the container in the handling station, and next the lift is pulled into the robot base.

The method of retrieving containers from the handling station and storing it on the rack shelves comprises all the analogous steps of the method specified in Example 4, with all the steps performed in reverse order.

### Example 5 - Method for retrieving containers from the rack (a double rack) and from the handling station

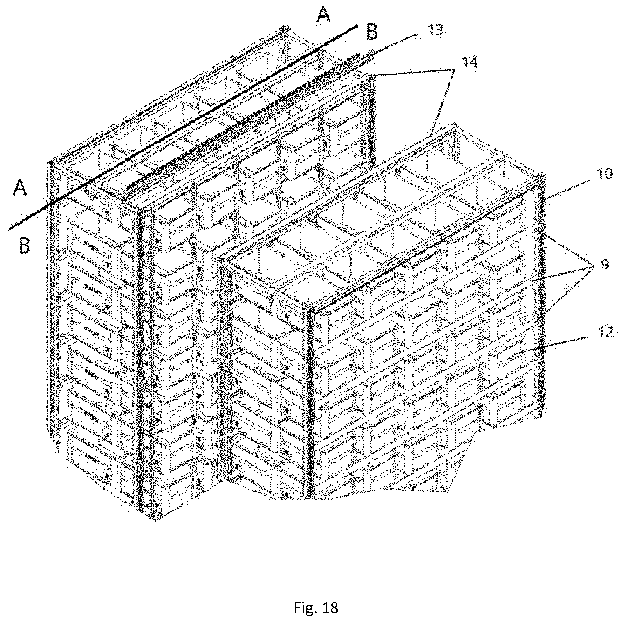

The method of retrieving containers (figs. 3a, 3b, 3c and 4) comprises the robot, the rack structure (a double rack; fig. 18) and the storage area for the closer and further container. The method of retrieving containers from a double rack is analogous to that of Example 4, wherein upon necessity to retrieve a further container (12), a closer container (12) is transported (moved) to any free container storage area on the rack, after which the further container (12) is retrieved and transported to the handling station.

The method of retrieving containers from the handling station and storing it on the double rack shelves comprises analogous steps of the method specified in Example 5, with all the steps performed in reverse order.

### Example 6 - Method for expansion of racks 1

The connection of rack A and B modules (fig. 13) in the horizontal direction is realized by the addition of racks to the shorter side of the structure. Racks A and B may range in capacity and height, wherein the level of the upper part of the structure at the point of joining the track 14 must be kept even.

### Example 7 - Method for expansion of racks 2

The connection of one rack A module with a one-piece rack B module (fig. 14) consists in attaching one part of rack C to the shorter side of rack A structure. On the opposite rack C, a track 14 is installed at the same level as the track of racks A and C. Racks A and C may range in capacity and height, wherein the level of the upper part of the structure at the point of joining the track 14 must be kept even.

### Example 8 - Method for expansion of racks 3

The connection of one rack A module with a rack B module (fig. 15) is made by means of a track mounted on the ends of the rack structure. Racks A and B may range in capacity and height, however, they must retain an even level of the upper part of the structure at the point of joining the track 14. The track 14 installed between rack A and B modules, with the spacing between the racks not exceeding 2.8 meters, does not require an additional support structure.

### Example 9 - Method for expansion of racks 4

The connection of two one-piece rack C and D modules (fig. 16) consists in attaching rack C to the shorter side of rack D structure. The track 14 is installed on the opposite side of rack C and D, at the same level as the track of rack C and D. The track 14 on the opposite side of the racks may be supported by a structure or other elements allowing for the track 14 to be installed in a stable manner. Racks C and D may range in capacity and height, wherein the level of the upper part of the structure at the point of joining the track 14 must be kept even.

### Example 10 - Method for expansion of racks 5

The connection of two racks A and B (fig. 17) with respect to their width is realized by the addition of racks to the longer side of the structure. Racks A and B can range in capacity and height, wherein the track 14 of racks A and B has to be at the same level.

### Example 11 - Method for expansion of racks 6

The connection of rack A and B modules (fig. 18) in the horizontal direction is realized by the addition of single racks to the longer side of the structure (a double rack). In this case, a rack structure is obtained that allows the storage of two containers (a closer and a further container) in one transverse row of containers (one container placed behind the other), with the possibility of combining three single modules (a triple rack) or more single modules, depending on the needs. Racks A and B may range in capacity and height, wherein the level of the upper part of the structure at the point of joining the track 14 must be kept even.

List of designations:
1 - robot,
2 - robot base,
3 - robot lift,
4 - gripper,
5 - gripper Y-axis slide system,
6 - lift transportation belt,
7 - lift guide rollers,
8 - handling station,
9 - container support shelf,
10 - rack structure,
11- Z-axis vertical lift guide,
12 - container,
13 - robot power supply system,
14 - X-axis robot track,
15 - guide holder,
16 - electronic system for controlling the robot,
17 - robot lift drive system (in the Z-axis),
18 - robot lift transportation belt transmission system,
19 - transverse gripper drive system,
20 - robot travel drive system (in the X axis),
21- gripper drive control system,
22 - longitudinal gripper drive system,
23 - lift-base wireless communication system,
24 - sensor signal concentrator,
25 - lift power supply system,
26 - cable drum,
27 - power supply belt,
28 - power supply system,
29 - mechanical cable compensator.

## Claims

1. A robot for transporting storage containers, comprising a robot base moving in the X-axis and a lift moving in the Z-axis, wherein the robot base is provided with an electronic system for controlling the robot, a robot travel drive system, a robot lift drive system, a drive transmission system comprising wheels of the robot and a transmission system for the lift transportation means, and a lift power supply system, wherein the lift is provided with a gripper and a gripper control system, whereas the gripper is propelled by the gripper drive system, while the robot base is connected to the lift with transportation means, **characterized in that** the lift (3) is provided with guide rollers (7) allowing for moving the lift (3) in the Z-axis, and the lift (3) gripper (4) is connected to a gripper Y-axis slide system (5), a transverse gripper drive system (19) and a longitudinal gripper drive system (22), wherein the gripper control system comprises a gripper drive control system (21) that is connected to a wireless communication system (23) and a sensor signal concentrator (24), whereas the lift power supply system (25) comprises a drum (26) with a power supply belt (27), a power supplying system (28) to the drum (26), and a mechanical compensator (29).

2. The robot according to claim 1, **characterized in that** the lift (3) has an H-shaped structure.

3. The robot according to any of the claims 1-2, **characterized in that** the transportation means comprise at least two cables or at least two transportation belts (6).

4. The robot according to any of the claims 1-3, **characterized in that** it comprises at least two guide rollers (7), preferably four guide rollers (7).

5. The robot according to any of the claims 1-4, **characterized in that** the guide rollers (7) are fixed in the corners of the lift (3).

6. The robot according to any of the claims 1-5, **characterized in that** the thickness of the power supply belt (27) is analogous to the thickness of the transportation belts (6).

7. The robot according to any of the claims 1-6, **characterized in that** the robot base (2) and lift (3) power supply system is fixed.

8. The container storage system, **characterized in that** it comprises the robot specified in claims 1-7 for transporting storage containers, a modular rack frame structure and a handling station, wherein the robot comprises a robot base moving in the X-axis and a lift moving in the Z-axis, and the robot base is provided with an electronic system for controlling the robot, a robot travel drive system, a robot lift drive system, drive a transmission system comprising wheels of the robot and a transmission system for the lift transportation means, and a lift power supply system, wherein the lift is provided with a gripper and a gripper control system, whereas the gripper is propelled by the gripper drive system, while the robot base is connected to the lift with lift transportation means, whereas the rack structure having a shape defined in the planes of a XYZ coordinate system comprises structural elements connected to each other in a detachable or non-detachable manner, wherein the rack comprises container support shelves fixed perpendicularly to the vertical profiles of the rack structure from which the storage columns are formed, **characterized in that** the lift (3) is provided with guide rollers (7) allowing for moving the lift (3) in the Z-axis, and the lift (3) gripper (4) is connected to a gripper Y-axis slide system (5), a transverse gripper drive system (19) and a longitudinal gripper drive system (22), wherein the gripper control system comprises a gripper drive control system (21) that is connected to a wireless communication system (23) and a sensor signal concentrator (24), whereas the lift power supply system (25) comprises a drum (26) with a power supply belt (27), a power supplying system (28) for the drum (26), and a mechanical compensator (29), wherein at least one track (14) and a robot power supply system (13) are attached to the upper part of the rack structure (10), and the side part of the rack structure (10) is provided with vertical guides (11) allowing for moving the lift (3) in the Z-axis with the participation of lift (3) guide rollers (7).

9. The system according to claim 8, **characterized in that** the container support shelves (9) are provided with guide holders (15).

10. The system according to any of the claims 8-9, **characterized in that** the spacing of the container support shelves (9) is variable.

11. The system according to any of the claims 8-10, **characterized in that** the vertical guides (11) are attached to the guide (15) holders, wherein preferably each storage column contains at least two vertical guides (11).

12. The system according to any of the claims 8-11, **characterized in that** the height between the container support shelves (9) is adjustable within the range of 50-500 mm, preferably within the range 120-400 mm.

13. The system according to claim 8, **characterized in that** the rack structure (10) comprises at least one single module, wherein preferably the rack structure (10) is extended along the shorter or the longer side of a single module.

14. A container storage method using the robot specified in claims 1-8 and the container storage system specified in claims 9-17, **characterized in that** it comprises the following stages:
a) the robot (1) is moved along the track (14) to reach the preset position in the X-axis, after which the lift (3) is lowered into the rack structure (10) with the participation of guide rollers (7) in vertical guides (11) to reach the preset position in the Z-axis,
b) the lift (3) with the gripper (4) is stopped at the base position of container (12) retrieval opposite the preset container (12) location, after which the gripper (4) arms are extended in the Y-axis toward the corresponding container (12) to a location allowing for the container (12) to be gripped,
c) the gripper (4) clamps on the corners of the container (12) to be gripped and pulls the container (12) onto the surface of the lift (3), after which the lift (3) together with the container (12) is pulled into the robot base (2) in the Z-axis,
d) the robot (1) is moved to the container (12) returning position in the X-axis, and after the robot (1) has reached the preset location in the X-axis, the lift (3) is lowered in the Z-axis to the handling station (8), after which the container (12) with the use of gripper (4) arms is ejected in the Y-axis into the handling station (8), after which the gripper (4) opens and after it has left the container (12) in the handling station (8), it returns to the base position, after which the lift (3) is pulled into the robot base (2).

15. The method according to claim 18, **characterized in that** the container (12) protrudes beyond the area of the rack structure (10), wherein preferably the gripper (4) clamps at the corners in the front of the protruding container (12).
